(19) Europäisches Patentamt
European Patent Office
Office européen des brevets

(11) **EP 1 037 764 B1**

(12) **EUROPÄISCHE PATENTSCHRIFT**

(45) Veröffentlichungstag und Bekanntmachung des Hinweises auf die Patenterteilung:
**15.05.2002 Patentblatt 2002/20**

(51) Int Cl.$^7$: **B60K 41/26**, F16H 61/18, F16H 61/16

(21) Anmeldenummer: **98961255.1**

(22) Anmeldetag: **07.12.1998**

(86) Internationale Anmeldenummer:
**PCT/EP98/07928**

(87) Internationale Veröffentlichungsnummer:
**WO 99/29532 (17.06.1999 Gazette 1999/24)**

(54) **AUTOMATGETRIEBE MIT RÜCKSCHALT-FUNKTION**

AUTOMATIC GEARBOX WITH A DOWNSHIFT FUNCTION

BOITE DE VITESSE AUTOMATIQUE A FONCTION DE RETROGRADATION

(84) Benannte Vertragsstaaten:
**DE FR GB IT**

(30) Priorität: **11.12.1997 DE 19755076**

(43) Veröffentlichungstag der Anmeldung:
**27.09.2000 Patentblatt 2000/39**

(73) Patentinhaber: **ZF FRIEDRICHSHAFEN Aktiengesellschaft 88038 Friedrichshafen (DE)**

(72) Erfinder:
• HERBSTER, Kai-Uwe
  D-88046 Friedrichshafen (DE)
• SCHULER, Franz-Josef
  D-88079 Kressbronn (DE)

(56) Entgegenhaltungen:
DE-A1- 4 031 019      GB-A- 2 282 861
US-A- 5 287 773

**Beschreibung**

Die Erfindung betrifft ein Verfahren zur Steuerung eines Automatgetriebes, bei dem mit Betätigung eines Bremspedales eine Rückschaltfunktion initiiert wird.

Bei Automatgetrieben tritt beim Bergabfahren das Problem auf, daß aufgrund der sich vergrößernden Fahrzeuggeschwindigkeit Hochschaltungen ausgeführt werden. Hierdurch wird die Motorbremswirkung verschlechtert. Aus dem Stand der Technik ist bekannt, diese Hochschaltungen zu unterdrücken. So schlägt z. B. die DE-OS 31 39 985 ein Verfahren vor, bei dem das Übersetzungsverhältnis des Automatgetriebes in Abhängigkeit von der Betätigung eines Bremspedales erhöht wird. Als Alternative wird vorgeschlagen, daß das Übersetzungsverhältnis so eingestellt wird, daß die Fahrgeschwindigkeit konstant bleibt.

Die US 5,287,773 A zeigt ein Verfahren zum Steuern eines Automatgetriebes, bei dem mit Betätigung des Bremspedales eine Rückschalt-Funktion initiiert wird, indem ein spezielles Schaltkennfeld verwendet wird, wo die Gangstufen in Abhängigkeit von Fahrzeuggeschwindigkeit und Drosselklappenstellung nach höheren Geschwindigkeiten hin verschoben geschaltet werden.

Ausgehend von dem zuvor beschriebenen Stand der Technik liegt der Erfindung die Aufgabe zugrunde, diesen weiterzuentwickeln.

Die Aufgabe wird erfindungsgemäß gelöst, indem bei initiierter Rückschaltfunktion ein neuer Rückschaltpunkt aus einem Basis-Rückschaltpunkt und einer Kenngröße K1 berechnet wird. Diese Kenngröße K1 wiederum berechnet sich aus einer Fahraktivität und einem berechneten Bremsdruck. Wie in Anspruch 2 ausgeführt, berechnet sich der Bremsdruck aus der Differenz eines Ist-Gradienten und einem fiktiven Gradienten der Getriebeausgangsdrehzahl. Der fiktive Gradient der Getriebeausgangsdrehzahl wiederum wird über ein Kennfeld bestimmt, welches eine Funktion der Fahrzeuggeschwindigkeit und einer Momentreserve darstellt. Diese Momentreserve bestimmt sich gemäß Anspruch 3 aus dem von der Brennkraftmaschine abgegebenen Moment und den Widerstandsmomenten.

Die erfindungsgemäße Lösung und deren Ausgestaltungen bieten den Vorteil, daß die Rückschaltfunktion besser an die Umgebungsbedingungen angepaßt ist. Hierbei charakterisiert die Momentreserve die Fahrbahnneigung und die Fahraktivität das Verhalten des Fahrers. Diese Fahraktivität kann über ein Verfahren bestimmt werden, wie dies z. B. aus DE-PS 39 22 051 bzw. DE-OS 39 41 999 bekannt ist. Da bei einer neueren Generation von Automatgetrieben mit intelligentem Schaltprogramm die Schaltpunkte in Abhängigkeit einer Fahraktivität ausgewählt werden, kann somit die erfindungsgemäße Lösung auf die bereits ermittelte Fahraktivität zurückgreifen. Die erfindungsgemäße Lösung kann vorteilhafterweise in eine bestehende Software kostengünstig integriert werden.

In den weiteren Unteransprüchen sind die Ausstiegskriterien aus der Rückschalt-Funktion beschrieben. Gemäß Anspruch 4 ist die Rückschalt-Funktion beendet, wenn der Fahrer das Bremspedal frei gibt und der Drosselklappenwert größer einem Mindestwert und eine erste Verzögerungszeit abgelaufen ist. Der Mindestwert wird über eine Zug-/Schub-Kennlinie bestimmt. Diese Ausgestaltung berücksichtigt z. B. den Fall, daß am Ende einer Gefällstrecke der Fahrer wieder über den Drosselklappenwert einen normalen Leistungsbedarf anmeldet.

Gemäß Anspruch 5 wird vorgeschlagen, daß bei einer signifikanten Änderung des Drosselklappensignals im Sinne eines großen Gradienten während der ersten Verzögerungszeit eine zweite Verzögerungszeit gestartet wird, wenn die signifikante Änderung nicht mehr vorliegt und die Rückschalt-Funktion beendet ist, wenn die zweite Verzögerungszeit abgelaufen ist. Diese Ausgestaltung berücksichtigt den Fall, daß der Fahrer während der ersten Verzögerungszeit rasch das Fahrpedal betätigt und dann auf einem festen Wert beibehält. Die Rückschalt-Funktion ist demnach erst mit Ablauf der zweiten Verzögerungszeit beendet.

Gemäß Anspruch 6 wird vorgeschlagen, daß die zweite Verzögerungszeit nochmals gestartet wird, wenn die Drosselklappe erneut betätigt wird bzw. der Drosselklappengradient den Grenzwert überschreitet. Die Rückschalt-Funktion ist dann unabhängig vom weiteren Verlauf der Drosselklappe beendet, wenn die zweite Verzögerungszeit abgelaufen ist.

In den Zeichnungen ist ein bevorzugtes Ausführungsbeispiel dargestellt. Es zeigen:

Fig. 1    ein System-Schaubild;

Fig. 2    ein erstes Kennfeld;

Fig. 3    ein zweites Kennfeld;

Fig. 4    ein Schaltkennfeld mit einer Rückschalt-Kennlinie;

Fig. 5    ein Zeit-Diagramm Funktionsende, erstes Fallbeispiel;

Fig. 6    ein Zeit-Diagramm Funktionsende, zweites Fallbeispiel;

Fig. 7    ein Zeit-Diagramm Funktionsende, drittes Fallbeispiel und

Fig. 8    einen Programm-Ablaufplan.

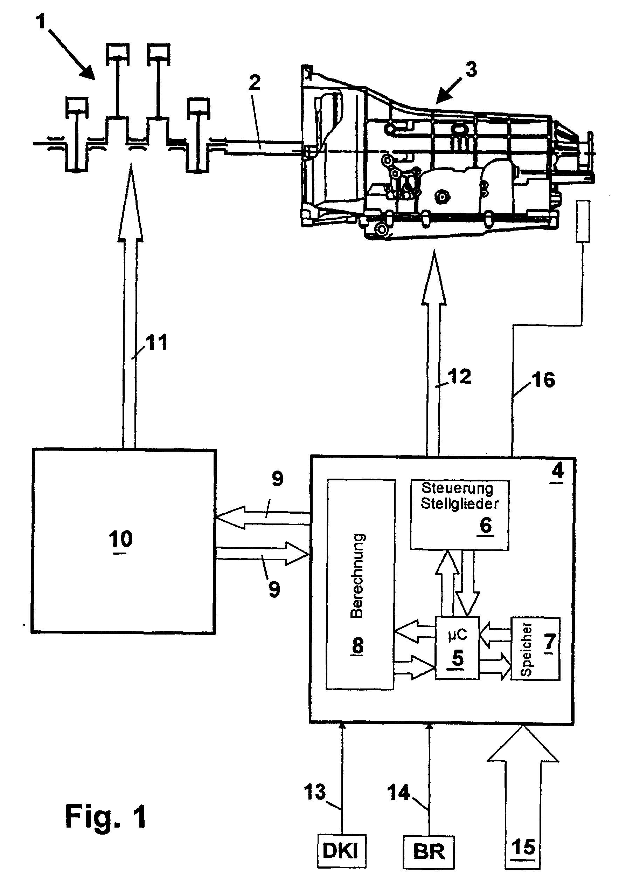

In Fig. 1 ist ein System-Schaubild einer Brennkraftmaschine/Automatgetriebe-Einheit dargestellt. Diese besteht aus der Brennkraftmaschine 1, dem Automatgetriebe 3, einer elektronischen Getriebesteuerung 4 und einem elektronischen Motorsteuergerät 10, welches über Steuerleitungen 11 die Brennkraftmaschine 1 steuert. Brennkraftmaschine 1 und Automatgetriebe 3 sind über eine Antriebswelle 2 mechanisch miteinander verbunden. Das elektronische Motorsteuergerät 10 und die elektronische Getriebesteuerung 4 sind über Datenleitungen 9 miteinander verbunden. Über diese Datenleitungen kommunizieren die beiden Steuergeräte, z. B. mittels CAN-Bus. Auf diesen Datenleitungen stellt z. B. das elektronische Motorsteuergerät 10 folgende Informationen bereit: Moment der Brennkraftmaschine MM, Drehzahl der Brennkraftmaschine nMOT, Temperatur der Kühlmittelflüssigkeit der Brennkraftmaschine usw. Die elektronische Getriebesteuerung 4 stellt als Informationen auf den Datenleitungen 9 z. B. den Beginn und das Ende eines Schaltübergangs, der sogenannte Motoreingriff, oder ein Soll-Motormoment zur Verfügung usw.

Die elektronische Getriebesteuerung 4 wählt in Abhängigkeit von weiteren Eingangsgrößen 13 bis 16 eine entsprechende Fahrstufe bzw. ein Schaltprogramm aus. Über ein hydraulisches Steuergerät, welches integraler Bestandteil des Automatgetriebes 3 ist und in dem sich elektromagnetische Stellglieder befinden, aktiviert sodann die elektronische Getriebesteuerung 4 via Steuerleitung 12 eine entsprechende Kupplungs-/Brems-Kombination. Von der elektronischen Getriebesteuerung 4 sind in stark vereinfachter Form als Blöcke darstellt: Micro-Controller 5, Speicher 7, Funktionsblock Steuerung Stellglieder 6 und Funktionsblock Berechnung 8. Im Speicher 7 sind die getrieberelevanten Daten abgelegt. Getrieberelevante Daten sind z. B. Programme, Schaltkennlinien, Kennfelder und fahrzeugspezifische Kennwerte als auch Diagnosedaten. Üblicherweise ist der Speicher 7 als EPROM, EEPROM oder als gepufferter RAM ausgeführt. Im Funktionsblock Berechnung 8 werden die für den Betrieb des Automatgetriebes 4 relevanten Daten, z. B. das Druckniveau, Fahraktivität usw., berechnet. Der Funktionsblock Steuerung Stellglieder 6 dient der Ansteuerung der sich im hydraulischen Steuergerät befindlichen Stellglieder.

Mit Bezugszeichen 13 ist ein Signal für die Drosselklappeninformation DKI, mit Bezugszeichen 14 das Signal des Bremspedales BR und mit Bezugszeichen 16 das Signal der Getriebeausgangsdrehzahl bezeichnet. Alternativ zur Drosselklappeninformation DKI kann selbstverständlich auch eine vom Fahrer vorgebbare Fahrpedalstellung als Eingangsgröße verwendet werden.

Mit Bezugszeichen 15 sind weitere Eingangsgrößen der elektronischen Getriebesteuerung 4, wie z. B. Wählhebelstellung, die Getriebeeingangsdrehzahl, die Temperatur des ATF (Automatic Transmission Fluid) usw., bezeichnet.

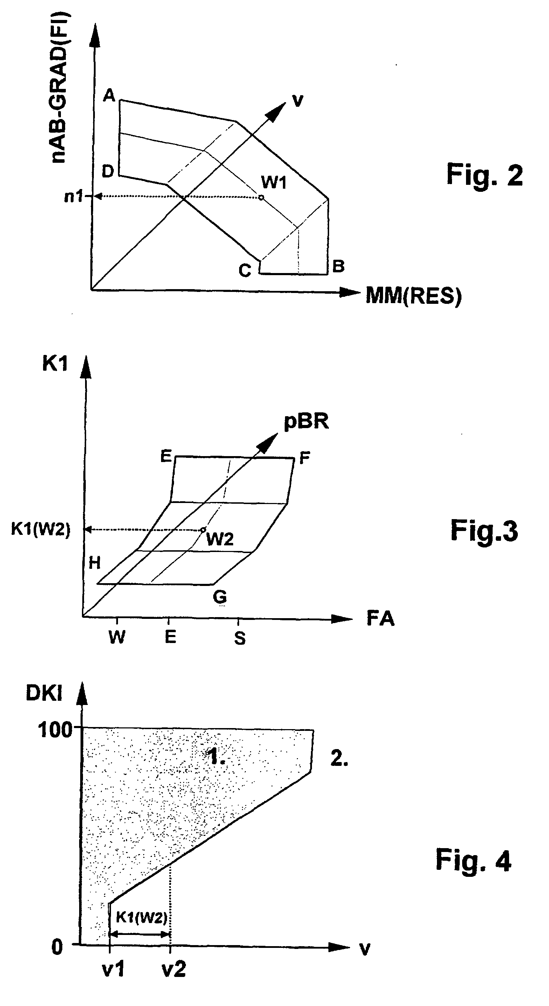

In Fig. 2 ist ein erstes Kennfeld dargestellt. Eingangsgrößen sind hierbei eine Momentreserve MM (RES) und die Fahrzeuggeschwindigkeit v. Ausgangsgröße des Kennfelds ist ein fiktiver Gradient der Getriebeausgangsdrehzahl nAB-GRAD(FI). Die Momentreserve wird aus dem von der Brennkraftmaschine 1 abgegebenen Moment MM und den Widerstandsmomenten M(WI) berechnet, MM(RES) = MM - M(WI). Über diese Größe Momentreserve MM(RES) ist somit die Fahrbahnneigung charakterisiert. Im Kennfeld ist eine Fläche mit den Eckpunkten A bis D aufgespannt. Als Beispiel ist auf dieser Fläche ein Punkt W1 eingezeichnet. Dieser wird bestimmt, indem aus der ermittelten Momentreserve MM(RES) und der Fahrzeuggeschwindigkeit v ein Schnittpunkt ermittelt und dieser auf die Fläche projiziert wird. Zu diesem Wert W1 ergibt sich als Ausgangsgröße ein Wert n1, wie dies dargestellt ist.

Aus dem fiktiven Gradienten der Getriebeausgangsdrehzahl nAB-GRAD(FI), dies entspricht also dem Wert n1, und dem aus der gemessenen Getriebeausgangsdrehzahl 16 ermittelten Ist-Gradienten nAB-GRAD(IST) wird gemäß folgender Beziehung ein normierter Bremsdruck berechnet:

$$pBR = K((nAB\text{-}GRAD(FI) - (nAB\text{-}GRAD(IST)))$$

| K: | Umrechnungsfaktor |
|---|---|
| nAB-GRAD(FI): | fiktiver Gradient der Getriebeausgangsdrehzahl |
| nAB-GRAD(IST): | IST-Gradient der Getriebeausgangsdrehzahl |

In Fig. 3 ist ein zweites Kennfeld dargestellt. Eingangsgrößen hierbei sind eine Fahraktivität FA und der zuvor berechnete Bremsdruck pBR. Ausgangsgröße ist eine Kenngröße K1. Im Kennfeld ist eine Fläche mit den Eckpunkten E bis H aufgespannt. Als Beispiel ist auf dieser Fläche ein Punkt W2 eingezeichnet. Dieser ergibt sich aus dem Schnittpunkt der aktuellen Fahraktivität FA und des Bremsdrucks pBR und der Projektion auf die Fläche. Der Betriebspunkt W2 ergibt als Ausgangsgröße den Wert K1(W2), wie dies in Fig. 3 dargestellt ist.

Die Fahraktivität kann über ein Verfahren bestimmt werden, wie dies z. B. aus DE-PS 39 22 051 bzw. DE-OS 39 41 999 bekannt ist.

Selbstverständlich läßt sich das erfindungsgemäße Verfahren auch bei konventionellen Automatgetrieben verwenden. Bei diesen hat der Fahrer die Möglichkeit, über einen Programmwahlschalter aus drei Fahrprogrammen auszuwählen, üblicherweise als "E" (Economy), "S" (Sport) und "W" (Winter) ausgeführt. Für diesen Fall sind in Fig. 3 als Alternative zu der Fahraktivität auf der Abszisse drei Festwerte "W", "E" und "S" entsprechend den Fahrprogrammen aufgetragen.

In Fig. 4 ist ein reduziertes Schaltkennfeld dargestellt. Ein derartiges Schaltkennfeld weist üblicherweise mehrere Hoch- und Rückschalt-Kennlinien auf. In Fig. 4 ist zur besseren Anschauung lediglich eine Rückschalt-Kennlinie, und zwar vom zweiten in den ersten Gang, dargestellt. Eingangsgrößen eines derartigen Schaltkennfeldes ist die Fahrzeuggeschwindigkeit v und der Wert der Drosselklappenstellung DKI. DKI = 0 bedeutet somit eine vollständig geschlossene Drosselklappe, d. h., der Fahrer hat das Fahrpedal nicht betätigt. In Fig. 4 ist für diesen Fall ein erster Fahrgeschwindigkeitswert v1 dargestellt. Dies entspricht einem Original-Rückschalt-Punkt RS(ORG) bei nicht aktivierter Rückschalt-Funktion. Der Wert v2 auf der Abszisse ergibt sich aus dem Original-Rückschalt-Punkt RS(ORG) und dem gemäß Fig. 2 und 3 berechneten Wert K1(W2); d. h., die Rückschaltung würde somit bei dem höheren Fahrzeuggeschwindigkeitswert v2 erfolgen.

Der Ablauf des Verfahrens ist folgendermaßen:

Betätigt der Fahrer das Bremspedal, so wird aus dem vom elektronischen Motor-Steuergerät bereitgestellten aktuellen Motormoment und den in der elektronischen Getriebesteuerung ermittelten Widerstandsmomenten der zuletzt bezeichnete Wert der Momentreserve MM(RES) festgehalten. Über das Kennfeld gemäß Fig. 2 wird sodann der fiktive Gradient der Getriebeausgangsdrehzahl 16 ermittelt. Über eine Berechnungsformel wird sodann der fiktive mit dem Ist-Gradienten der Getriebeausgangsdrehzahl 16 und einem Umrechnungsfaktor verknüpft. Rechenergebnis ist hierbei ein Bremsdruck pBR. Mittels des Bremsdruckes pBR und einer berechneten Fahraktivität FA wird dann gemäß dem Kennfeld der Fig. 3 eine Kenngröße K1 bestimmt. Der Rückschalt-Punkt für den Wert DKI = 0 wird sodann in Abhängigkeit der Kenngröße K1 zu höheren Fahrzeuggeschwindigkeiten v verschoben, d. h. die Rückschaltung erfolgt zu einem früheren Zeitpunkt. Hierdurch wird die Motorbremswirkung benützt. Nachdem eine Rückschaltung ausgeführt wurde, wird geprüft, ob eine weitere Rückschaltung erforderlich ist bzw. ob ein Ende der Rückschalt-Funktion erkannt wurde. Für den Fall, daß bereits fahrzeugseitig ein Bremsdrucksensor vorhanden ist, ergibt sich für die erfindungsgemäße Lösung, daß dieser als Eingangsgröße pBR für das zweite Kennfeld, also die Fig. 3, verwendet werden kann. Eine Berechnung gemäß Fig. 2 entfällt.

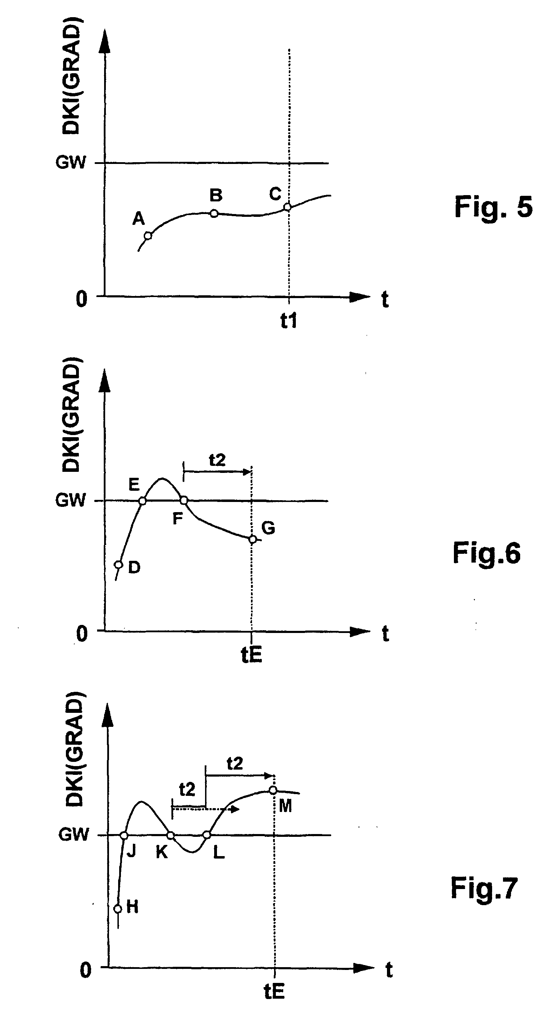

In Fig. 5 ist ein Zeit-Diagramm für das Ende der Rückschalt-Funktion in einem ersten Fallbeispiel dargestellt. Auf der Ordinate ist der Gradient der Drosselklappe DKI(GRAD) aufgetragen. Parallel zur Abszisse ist eine Grenzwertlinie GW eingezeichnet. Der Kurvenzug mit den Punkten A, B und C stellt hierbei den gemessenen, tatsächlichen Verlauf des DKI-Gradienten dar. Bei diesem ersten Fallbeispiel bleibt der Verlauf des DKI-Gradienten unterhalb der Grenzwertlinie GW. Zum Zeitpunkt t = 0 gibt der Fahrer das Bremspedal frei BR = 0. Es wird des weiteren davon ausgegangen, daß die Drosselklappeninformation DKI größer einem Mindestwert MIN ist. Dieser Mindestwert wird über die Zug-/Schub-Kennlinie bestimmt. Sind beide Bedingungen erfüllt, wird die erste Verzögerungszeit t1 gestartet. Ist diese abgelaufen, so ist die Rückschalt-Funktion beendet. Gemäß Fig. 5 ist dies somit im Zeitpunkt t1 und im Punkt C der Fall. Das Endekriterium lautet somit in diesem Fall: BR = 0 und DKI > Mindestwert aus Zug-/Schub-Kennlinie und t1 = 0.

In Fig. 6 ist ein zweites Fallbeispiel für das Ende der Rückschalt-Funktion dargestellt. Der gemessene DKI-Gradient DKI(GRAD) ist hierbei durch den Kurvenzug mit den Punkten D, E, F und G dargestellt. Ein derartiger Verlauf tritt z. B. in der Praxis auf, wenn am Ende einer Gefällstrecke der Fahrer das Fahrpedal rasch betätigt und dann konstant hält. Im Punkt E überschreitet der DKI-Gradient die Grenzwertlinie GW. Unterschreitet dieser wieder die Grenzwertlinie GW, also im Punkt F, wird eine zweite Verzögerungszeit t2 gestartet. Bei diesem Beispiel bleibt der DKI-Gradient dann unterhalb der Grenzwertlinie GW. Mit Ablauf der Verzögerungszeit t2, also zum Zeitpunkt tE im Punkt G, ist die Rückschalt-Funktion beendet. Das Endekriterium ist somit in diesem Fall: t2 = 0 und DKI-Gradient < GW.

In Fig. 7 ist ein drittes Fallbeispiel für das Ende der Rückschalt-Funktion dargestellt. Hierbei wurde ein DKI-Gradienten-Verlauf mit den Punkten H bis M zugrunde gelegt. Wie bereits bei Fig. 6 ausgeführt, wird die zweite Verzögerungszeit t2 gestartet, wenn der DKI-Gradient die Grenzwertlinie GW unterschreitet, also hier im Punkt K. Danach betätigt der Fahrer erneut das Fahrpedal, so daß im Punkt L der DKI-Gradient die Grenzwertlinie GW wiederum überschreitet. Bei diesem Beispiel wird mit Überschreiten der Grenzwertlinie GW, also hier im Punkt L, die zweite Verzögerungszeit t2 erneut gestartet. Das Funktionsende tritt dann mit Ablauf der Zeitstufe t2, also im Zeitpunkt tE, ein. Das Funktionsende ist in diesem Fall unabhängig vom weiteren Verlauf des DKI-Gradienten.

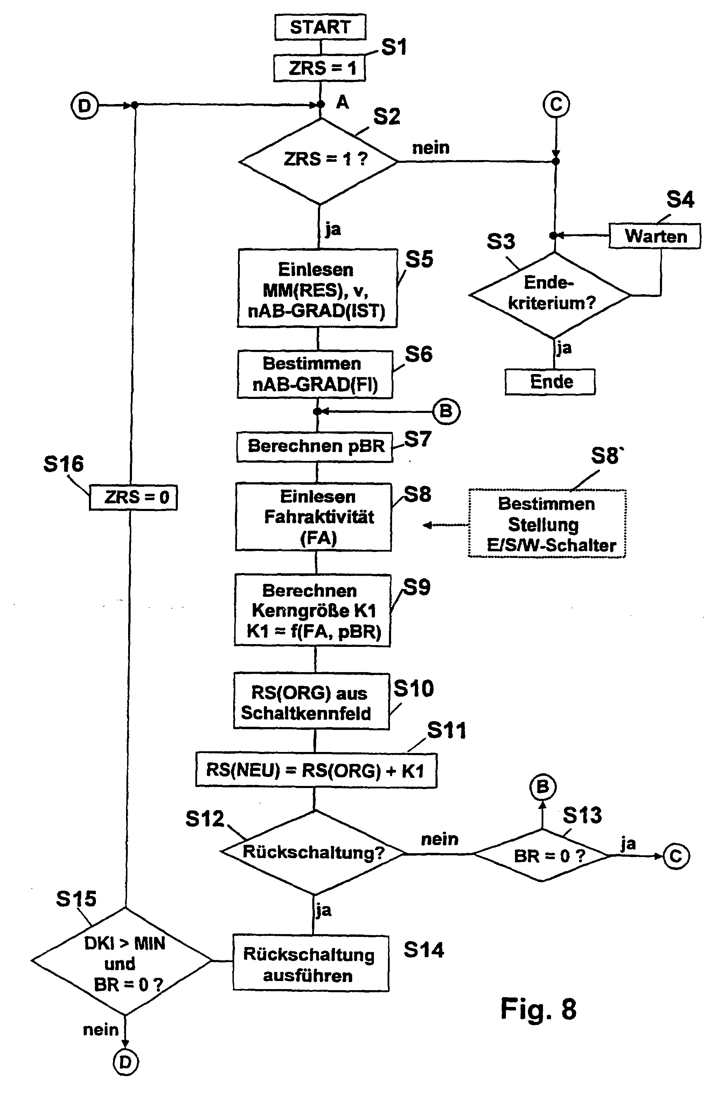

In Fig. 8 ist ein Programm-Ablaufplan des erfindungsgemäßen Verfahrens dargestellt. Die Funktion wird initiiert, wenn der Fahrer das Bremspedal BR = 1 betätigt. Bei Schritt S1 wird somit die Rückschalt-Funktion ZRS aktiviert. Im Schritt S2 wird abgefragt, ob die Rückschalt-Funktion aktiviert ist. Ist dies nicht der Fall, so wird mit Schritt S3 abgefragt, ob ein Endekriterium erkannt wurde. Bei positivem Abfrageergebnis im Schritt S2, d. h. die Rückschalt-Funktion ZRS ist aktiviert, wird im Schritt S5 der aktuelle Wert der Momentreserve MM(RES), der Fahrzeuggeschwindigkeit v und der aus der Getriebeausgangsdrehzahl 16 bestimmte Ist-Gradient nAB-GRAD(IST) eingelesen. Diese Größen werden von der elektronischen Getriebesteuerung während des Betriebs permanent ermittelt. Danach wird im Schritt S6 aus der Momentreserve MM(RES) und der Fahrzeuggeschwindigkeit v über das erste Kennfeld gemäß Fig. 2 der fiktive Gradient der Getriebeausgangsdrehzahl nAB-GRAD(FI) festgelegt. Bei Schritt S7 wird aus dem fiktiven und dem Ist-Gradienten der Getriebeausgangsdrehzahl der Bremsdruck pBR gemäß der folgenden Formel berechnet:

$$pBR = K((nAB\text{-}GRAD(FI) - (nAB\text{-}GRAD(IST)))$$

K: Umrechnungsfaktor  
nAB-GRAD(FI) : fiktiver Gradient der Getriebeausgangsdrehzahl  
nAB-GRAD(IST) : IST-Gradient der Getriebeausgangsdrehzahl

Im Schritt S8 wird der aktuelle Wert der Fahraktivität FA eingelesen. Da bei einer neueren Generation von Automatgetrieben mit intelligentem Schaltprogramm die Schaltpunkte in Abhängigkeit einer zuvor berechneten Fahraktivität FA festgelegt werden, kann somit dieser Wert FA verwendet werden. Bei Schritt S9 wird sodann die Kenngröße K1 über das zweite Kennfeld gemäß Fig. 3 berechnet. Bei Schritt S10 wird aus dem Schaltkennfeld der Rückschalt-Punkt RS(ORG) ermittelt. In Fig. 4 entspricht dies dem Punkt mit dem Abszissenwert v1 und dem Ordinatenwert DKI = 0. Im Schritt S11 wird sodann der neue Rückschalt-Punkt RS (NEU) bestimmt, indem der ursprüngliche Rückschalt-Punkt RS(ORG) mit der Kenngröße K1 addiert wird. Gemäß Fig. 4 entspricht dies dem Abszissenwert v2. Bei Schritt S12 wird abgefragt, ob eine Rückschalt-Kennlinie überschritten wurde. Ist dies nicht der Fall, so wird bei Schritt S13 geprüft, ob der Fahrer die Bremse freigegeben hat, BR = 0. Ergibt die Prüfung im Schritt S13, daß der Fahrer die Bremse immer noch betätigt hält, verzweigt das Programm zum Punkt B und wird danach bei Schritt S7 fortgesetzt. Ergibt die Abfrage bei Schritt S13, daß der Fahrer das Bremspedal freigegeben hat, verzweigt das Programm zum Punkt C und fährt danach mit dem Schritt S3 fort. Bei positivem Abfrageergebnis im Schritt S12, d. h. eine Rückschaltkennlinie wurde überschritten, wird mit Schritt S14 die Rückschaltung ausgeführt. Danach wird bei Schritt S15 abgefragt, ob DKI größer einem Mindestwert ist und das Bremspedal freigegeben ist. Der Mindestwert wird hierbei aus einer Zug-/Schub-Kennlinie bestimmt. Ist die Abfrage bei Schritt S15 nicht erfüllt, verzweigt das Programm zum Punkt D und fährt danach mit dem Schritt S2 fort. Bei positivem Abfrageergebnis im Schritt S15 wird bei Schritt S16 die Rückschalt-Funktion ZRS zurückgesetzt. Danach fährt das Programm beim Schritt S2 fort. Ergibt die Prüfung beim Schritt S2, daß die Rückschalt-Funktion inaktiv ist, wird bei Schritt S3 abgefragt, ob ein Endekriterium erkannt wurde. Ist dies nicht der Fall, so wird im Schritt S4 eine Warteschleife durchlaufen. Wird das Endekriterium bei der Abfrage S3 erkannt, so ist der Programm-Ablaufplan beendet.

Beim Schritt S8 ist eine Alternative, als gestrichelt dargestellter Funktionsblock mit Bezugszeichen S8', dargestellt. Diese Variante bietet sich für Automatgetriebe an, die über kein intelligentes Schaltprogramm, sondern lediglich über einen Programm-Wahlschalter, verfügen. Üblicherweise besitzt ein derartiger Programm-Wahlschalter die drei Stellungen Economy "E", Sport "S" und Winter "W". Für diesen Fall wird die Kenngröße K1 gemäß der in Fig. 3 dargestellten Alternative berechnet.

Bezugszeichen

1    Brennkraftmaschine
2    Antriebswelle
3    Automatgetriebe
4    elektronische Getriebesteuerung
5    Micro-Controller
6    Funktionsblock Steuerung Stellglieder
7    Speicher
8    Funktionsblock Berechnung
9    Datenleitung
10   elektronisches Motor-Steuergerät
11   Steuerleitung
12   Steuerleitung
13   Drosselklappeninformation
14   Bremspedalsignal
15   Eingangsgrößen
16   Getriebeausgangsdrehzahlsignal

**Patentansprüche**

1. Verfahren zur Steuerung eines Automatgetriebes (3), bei dem die Gangstufen (i, i = 1, 2...n) durch eine elektronische Getriebesteuerung (4) über ein Schaltkennfeld (SKF) in Abhängigkeit von Fahrzeuggeschwindigkeit (v) und Drosselklappenstellung (DKI) geschaltet werden, und bei dem mit Betätigung eines Bremspedals (BR = 1) eine Rückschaltungsfunktion (RSZ = 1) initiiert wird, **dadurch gekennzeichnet, daß** bei Initialisierung der Rückschaltungsfunktion (RSZ = 1) ein neuer Rückschalt-Punkt (RS(NEU)) bei geschlossener Drosselklappe (DKI = 0) von der elektronischen Getriebesteuerung (4) berechnet wird, indem ein Basis-Rückschalt-Punkt (RS(ORG)) aus dem Schaltkennfeld (SKF) berechnet wird, eine Kenngröße (K1) über ein Kennfeld aus einer Fahraktivität (FA) und einem berechneten Bremsdruck (pBR) bestimmt wird und die Kenngröße (K1) zu dem Basis-Rückschalt-Punkt (RS(ORG)) aufaddiert wird.

2. Verfahren nach Anspruch 1, **dadurch gekennzeichnet, daß** der Bremsdruck (pBR) aus einem Ist-Gradienten (nAB-GRAD(IST)) einer Getriebeausgangsdrehzahl (16) und einem fiktiven Gradienten (nAB-GRAD(FI)) der Getriebeausgangsdrehzahl (16) bestimmt wird, indem die Differenz von fiktivem Gradient (nAB-GRAD(FI)) und Ist-Gradient (nAB-GRAD(IST)) mit einem Umrechnungsfaktor (K) multipliziert wird, wobei der fiktive Gradient (nAB-GRAD(FI)) der Getriebeausgangsdrehzahl (16) über ein Kennfeld als Funktion der Fahrzeuggeschwindigkeit (v) und einer Momentenreserve (MM(RES)) bestimmt wird.

3. Verfahren nach Anspruch 2, **dadurch gekennzeichnet, daß** die Momentreserve (MM(RES)) bestimmt wird aus dem von der Brennkraftmaschine abgegebenen Moment (MM) und den Widerstandsmomenten (M(WI)).

**4.** Verfahren nach einem der vorausgegangenen Ansprüchen, **dadurch gekennzeichnet, daß** die Rückschalt-Funktion beendet ist (RSZ = 0), wenn folgende Bedingungen erfüllt sind:

- Freigabe des Bremspedales (BR = 0) und
- Drosselklappenwert (DKI) ist größer einem Mindestwert (MIN), wobei der Mindestwert über eine Zug-/Schub-Kennlinie bestimmt ist und
- eine erste Verzögerungszeit (t1) abgelaufen ist, wobei diese mit Freigabe des Bremspedales (BR = 0) gestartet wird.

**5.** Verfahren nach Anspruch 4, **dadurch gekennzeichnet, daß** bei einer signifikanten Änderung des Drosselklappensignales (DKI(GRAD) > Grenzwert) während der ersten Verzögerungszeit (t1) eine zweite Verzögerungszeit (t2) gestartet wird, wenn die signifikante Änderung nicht mehr vorliegt (DKI (GRAD) < Grenzwert) und die Rückschalt-Funktion nach Ablauf der zweiten Verzögerungszeit (t2 = 0) beendet ist.

**6.** Verfahren nach Anspruch 5, **dadurch gekennzeichnet, daß** bei einer erneuten signifikanten Änderung der Drosselklappe (DKI(GRAD) > GW) während der zweiten Verzögerungszeit (t2) diese erneut gestartet wird und die Rückschalt-Funktion unabhängig vom weiteren Verlauf der Drosselklappe beendet ist, wenn die zweite Verzögerungszeit abgelaufen (t2 = 0) ist.

## Claims

**1.** Method for controlling an automatic transmission (3), in which the gear steps (i, i = 1, 2...n) are shifted by an electronic transmission control system (4) via a shift characteristic diagram (SKF) in accordance with the vehicle velocity (v) and throttle position (DKI), and in which a downshift function is initiated (RSZ = 1) when a brake pedal is operated (BR = 1), **characterised in that** a new downshift point (RS (NEU)) is calculated by the electronic control system (4) when the downshift function is initialized (RSZ = 1) and the throttle is closed (DKI = 0) by calculating a basic downshift point (RS(ORG)) from the shift characteristic diagram (SKF), determining a characteristic (K1) via a characteristic diagram from a driving activity (FA) and a calculated braking pressure (pBR) and adding the characteristic (K1) to the basic downshift point (RS(ORG)).

**2.** Method according to Claim 1, **characterised in that** the braking pressure (pBR) is determined from an actual gradient (nAB-GRAD(IST)) of a transmission output speed (16) and a fictitious gradient (nAB-GRAD(FI)) of the transmission output speed (16) by multiplying the difference of the fictitious gradient (nAB-GRAD(FI)) and the actual gradient (nAB-GRAD(IST) by a conversion factor (K), wherein the fictitious gradient (nAB-GRAD(FI)) of the transmission output speed (16) is determined via a characteristic diagram as a function of the vehicle velocity (v) and a torque reserve (MM(RES)).

**3.** Method according to Claim 2, **characterised in that** the torque reserve (MM(RES)) is determined from the torque (MM) delivered by the internal combustion engine and the moments of resistance (M(WI)).

**4.** Method according to any one of the preceding Claims, **characterised in that** the downshift function is terminated (RSZ = 0) when the following conditions are fulfilled:

- the brake pedal is released (BR = 0) and
- the throttle value (DKI) exceeds a minimum value (MIN), wherein the minimum value is determined via a traction/overrun characteristic and
- a first deceleration time (t1) has ended, wherein this is started when the brake pedal is released (BR = 0).

**5.** Method according to Claim 4, **characterised in that**, given a significant change in the throttle signal (DKI(GRAD) > limit value) during the first deceleration time (t1), a second deceleration time (t2) is started when the significant change ceases to exist (DKI(GRAD) < limit value) and the downshift function is terminated at the end of the second deceleration time (t2 = 0).

**6.** Method according to Claim 5, **characterised in that**, given a new significant change in the throttle (DKI(GRAD) > GW) during the second deceleration time (t2), this is restarted and the downshift function is terminated irrespective of the further variation of the throttle when the second delay time has ended (t2 = 0).

## Revendications

**1.** Procédé pour la commande d'une transmission automatique (3) dans lequel les étages de vitesse (i, i = 1, 2...n) sont commutés par une commande électronique de transmission (4) sur la base d'un diagramme de changement (SKF) en fonction de la vitesse du véhicule (v) et de la position du volet des gaz (DKI) et dans lequel une fonction de rétrogradation (RSZ = 1) est initialisée avec l'actionnement d'une pédale de frein (BR = 1), **caractérisé en ce que**, lors de l'initialisation de la fonction de rétrogradation (RSZ = 1), un nouveau point de rétrogradation (RS (NEU)) avec le volet des gaz fermé (DKI = 0) est calculé par la commande électronique de transmission (4), par le fait qu'un point de rétrogradation de base (RS(ORG)) est calculé à partir du diagramme caractéristique de changement (SKF), qu'une grandeur caractéristique (K1) est déterminée sur la base d'un diagramme caractéristique à partir d'une activité de marche (FA) et d'une pression de frein calculée (pBR), et que la grandeur caractéristique (K1) est additionnée au point de rétrogradation de base (RS (ORG)).

2. Procédé selon la revendication 1, **caractérisé en ce que** la pression de frein (pBR) est déterminée à partir d'un gradient réel (nAB-GRAD (IST)) de la vitesse de rotation de sortie (16) de la transmission et d'un gradient fictif (nAB-GRAD (FI)) de la vitesse de rotation de sortie (16) de la transmission par le fait que la différence entre le gradient fictif (nAB-GRAD (FI)) et le gradient réel (nAB-GRAD (IST)) est multiplié par un facteur de conversion (K), le gradient fictif (nAB-GRAD (FI)) de la vitesse de rotation de sortie (16) de la transmission étant déterminé sur la base d'un diagramme caractéristique en fonction de la vitesse du véhicule (v) et d'une réserve de couple (MM (RES)).

3. Procédé selon la revendication 2, **caractérisé en ce que** la réserve de couple (MM (RES)) est déterminée à partir du couple (MM) délivré par le moteur à combustion interne et du couple résistant (M (WI)).

4. Procédé selon l'une des revendications précédentes, caractéris é en ce que la fonction de rétrogradation est interrompue (RSZ = 0), lorsque les conditions suivantes sont remplies :

- relâchement de la pédale de frein (BR = 0) et
- la valeur du volet des gaz (DKI) est plus grande qu'une valeur minimale (MIN), la valeur minimale étant déterminée sur la base d'une caractéristique traction/poussée,
- un premier temps de temporisation (t1) est écoulé, ce temps étant démarré avec le relâchement de la pédale de frein (BR = 0).

5. Procédé selon la revendication 4, **caractérisé en ce que**, s'il se produit une modification significative du signal du volet des gaz (DKI (GRAD) > valeur limite) pendant le premier temps de temporisation (t1), un deuxième temps de temporisation (t2) est lancé lorsque la modification significative n'est plus présente (DKI (GRAD) < valeur limite) et la fonction de rétrogradation est interrompue après l'écoulement du deuxième temps de temporisation (t2 = 0).

6. Procédé selon la revendication 5, **caractérisé en ce que**, s'il se produit de nouveau une modification significative du volet des gaz (DKI (GRAD) > GW) pendant le deuxième temps de temporisation (t2), ce dernier est de nouveau lancé et la fonction de rétrogradation est interrompue indépendamment de l'évolution ultérieure du volet des gaz, lorsque le deuxième temps de temporisation est écoulé (t2 = 0).

**1**

**2**

**3**

**11**

**12**

**16**

**9**

**9**

**10**

Steuerung
Stellglieder
**6**

Berechnung

**8**

μC
**5**

Speicher **7**

**4**

**13**

**14**

**15**

# Fig. 1

DKI

BR

**Fig. 2**

**Fig.3**

**Fig. 4**

Fig. 5

Fig.6

Fig.7

START

ZRS = 1 — S1

D → A

S2
ZRS = 1 ? — nein → C

ja

Einlesen MM(RES), v, nAB-GRAD(IST) — S5

Bestimmen nAB-GRAD(FI) — S6 ← B

Berechnen pBR — S7

Einlesen Fahraktivität (FA) — S8 ← Bestimmen Stellung E/S/W-Schalter — S8`

Berechnen Kenngröße K1 K1 = f(FA, pBR) — S9

RS(ORG) aus Schaltkennfeld — S10

RS(NEU) = RS(ORG) + K1 — S11

S12 Rückschaltung? — nein → S13 BR = 0 ? — ja → C

B

ja

Rückschaltung ausführen — S14

S15 DKI > MIN und BR = 0 ?

nein → D

S16 ZRS = 0

S3 Ende-kriterium? ← Warten — S4

ja

Ende

Fig. 8